(19) Europäisches Patentamt
European Patent Office
Office européen des brevets

(11) **EP 3 561 157 B1**

(12) **EUROPEAN PATENT SPECIFICATION**

(45) Date of publication and mention
of the grant of the patent:
**13.10.2021 Bulletin 2021/41**

(21) Application number: **17884307.4**

(22) Date of filing: **19.12.2017**

(51) Int Cl.:
*C25D 7/06* (2006.01)          *C25D 5/10* (2006.01)
*C25D 5/50* (2006.01)          *B60C 9/00* (2006.01)
*C21D 9/52* (2006.01)          *C22C 9/04* (2006.01)
*C22C 38/00* (2006.01)         *C22C 38/18* (2006.01)
*D07B 1/06* (2006.01)          *C21D 9/64* (2006.01)

(86) International application number:
**PCT/JP2017/045606**

(87) International publication number:
**WO 2018/117124 (28.06.2018 Gazette 2018/26)**

(54) **PLATED STEEL WIRE, METHOD OF MANUFACTURING PLATED STEEL WIRE, STEEL CORD AND RUBBER COMPOSITE**

PLATTIERTER STAHLDRAHT, VERFAHREN ZUR HERSTELLUNG EINES PLATTIERTEN STAHLDRAHTES, STAHLSEIL UND KAUTSCHUKKOMPOSIT

FIL D'ACIER PLAQUÉ, PROCÉDÉ DE FABRICATION DE FIL D'ACIER PLAQUÉ, CÂBLE D'ACIER ET COMPOSITE À BASE DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016 JP 2016245267**

(43) Date of publication of application:
**30.10.2019 Bulletin 2019/44**

(73) Proprietor: **Nippon Steel Corporation**
**Tokyo 1008071 (JP)**

(72) Inventor: **KODAMA, Junichi**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**CN-A- 105 862 592      JP-A- S6 184 233**
**JP-A- H07 164 163      JP-A- H09 109 609**
**JP-A- S52 119 691      JP-A- 2005 314 808**
**JP-A- 2015 021 184      JP-A- 2015 030 857**
**JP-B2- 2 572 177       US-A- 5 344 315**

# EP 3 561 157 B1

## Description

### Technical Field

This disclosure relates to a plated steel wire, a method of manufacturing a plated steel wire, a steel cord, and a rubber composite.

### Background Art

Conventionally, studies have been made on plated steel wires including a plating layer containing Zn (zinc).

Plated steel wires including a plating layer containing Zn (zinc) are used, for example, as a reinforcing material for a rubber-containing member (for example, a tire).

For example, Patent Document 1 discloses a steel wire for reinforcing rubber articles galvanized by electroplating, which has a zinc coating including at least one metal powder selected from the group consisting of magnesium, aluminum, titanium, and manganese, as a steel wire for reinforcing rubber articles with improved corrosion fatigue resistance while suppressing weight increase.

Patent Document 2 discloses a plated steel wire having a brass plating layer made of Cu, Zn, Al, and inevitable impurities on the surface and having a diameter of from 0.1 to 0.4 mm, as a plated steel wire having excellent adhesion to rubber, having little deterioration of adhesive strength, and having excellent adhesion to rubber, without impairing productivity. Patent Document 2 also discloses a plated steel wire in which the brass plating layer contains, in % by mass, from 60 to 70% of Cu and from 0.1 to 5% of Al, the balance being Zn and inevitable impurities, the thickness of the brass plating layer is from 50 to 500 nm, and the diameter is from 0.1 to 0.4 mm, as a preferred embodiment of the above-described plated steel wire.

Patent Document 3 discloses a plated steel wire comprising a steel wire; and a brass plating layer covering an outer peripheral surface of the steel wire and composed of Cu, Zn, Al. The Al content is from 0.0001-0.5 % by mass.

Patent Document 1: Japanese Patent Application Laid-Open (JP-A) No. 2016-33235
Patent Document 2: Japanese Patent Application Laid-Open (JP-A) No. 2017-128756
Patent Document 3: JP H09 109609

## SUMMARY OF INVENTION

### Technical Problem

However, in the steel wire for reinforcing rubber articles described in Patent Document 1, adhesion to rubber may be insufficient.

There are some cases where improvement in fatigue characteristics under the corrosive environment (hereinafter, also referred to as "corrosion fatigue characteristics") of the plated steel wire described in Patent Document 2 is demanded.

An object of one embodiment of the disclosure is to provide a plated steel wire ensuring adhesion to rubber and excellent in corrosion fatigue characteristics, a method of producing the plated steel wire which is suitable for producing the plated steel wire and excellent in wire drawability, a steel cord including the plated steel wire, and a rubber composite including the plated steel wire or the steel cord.

### Solution to Problem

<1> A plated steel wire comprising:

a steel wire; and
a brass plating layer covering an outer peripheral surface of the steel wire and composed of Cu, Zn, Al, and impurities, in which, assuming a total of Cu, Zn, and Al to be 100% by mass, a Cu content is from 60% by mass to less than 70% by mass and an Al content is from 5.5% by mass to less than 15% by mass, and an average thickness is from 180 nm to 2,000 nm.

<2> The plated steel wire according to <1>, wherein a diameter of the plated steel wire is from 0.10 mm to 0.40 mm.

2

<3> A method of manufacturing the plated steel wire according to <1> or <2>, the method comprising, in a case in which the steel wire, the brass plating layer, and the plated steel wire are a first steel wire, a first brass plating layer, and a first plated steel wire, respectively:

a process of preparing a second plated steel wire including a second steel wire and a second brass plating layer composed of Cu, Zn, Al, and impurities, in which, assuming a total of Cu, Zn, and Al to be 100% by mass, a Cu content is from 60% by mass to less than 70% by mass, and an Al content is from 5.5% by mass to less than 15% by mass, and the second brass plating layer covering an outer peripheral surface of the second steel wire; and

a process of obtaining the first plated steel wire including the first steel wire and the first brass plating layer by wire drawing the second plated steel wire.

<4> The method of manufacturing a plated steel wire according to <3>, wherein the wire drawing is wet wire drawing that is non-slip type and that satisfies a condition that a back tension acting on the second plated steel wire is from 5% to 20% of a breaking load of the second plated steel wire.

<5> A steel cord comprising the plated steel wire according to <1> or <2>.

<6> A rubber composite comprising: the plated steel wire according to <1> or <2> or the steel cord according to <5>; and rubber.

Advantageous Effects of Invention

According to the disclosure, a plated steel wire ensuring adhesion to rubber and excellent in corrosion fatigue characteristics, a method of producing the plated steel wire which is suitable for producing the plated steel wire and excellent in wire drawability, a steel cord including the plated steel wire, and a rubber composite including the plated steel wire or the steel cord are provided.

BRIEF DESCRIPTION OF DRAWINGS

Fig. 1 is a graph showing an example of a relationship between an Al content (% by mass) in a brass plating layer and a corrosion fatigue durability ratio index in a plated steel wire including a brass plating layer made of Cu, Zn, Al, and impurities.

Fig. 2 is a diagram schematically showing an outline of a rotating-bending fatigue test in evaluating corrosion fatigue characteristics of a plated steel wire.

Fig. 3 is a diagram conceptually showing an S-N diagram of an example of a plated steel wire of the disclosure and an S-N diagram of an example of conventional Cu-Zn brass plating.

DESCRIPTION OF EMBODIMENTS

Herein, the numerical range expressed by using "from A to B" means a range including numerical values A and B as a lower limit value and an upper limit value.

Herein, the term "process" includes not only an independent process but also a case where an intended purpose of the process can be achieved even when the process can not be clearly distinguished from another process.

In a stepwise numerical range described herein, the upper limit value or the lower limit value described in one stepwise numerical range may be replaced by the upper limit value or the lower limit value of another stepwise numerical range or a value described in Examples.

Herein, the content of Cu (copper) is referred to as "Cu content" in some cases. The content of another element may also be indicated similarly.

Herein, a Cu content and an Al content in a brass plating layer means the the Cu content and the Al content when the total of Cu, Zn, and Al is assumed to be 100% by mass.

[Plated Steel Wire]

The plated steel wire of the disclosure includes: a steel wire; and a brass plating layer covering the outer peripheral surface of the steel wire and composed of Cu, Zn, Al, and impurities in which, assuming the total of Cu, Zn, and Al to be 100% by mass, the Cu content is from 60% by mass to less than 70% by mass and the Al content is from 5.5% by mass to less than 15% by mass, and the average thickness is from 180 nm to 2,000 nm.

The plated steel wire of the disclosure ensures adhesion to rubber and is excellent in fatigue characteristics under a corrosive environment (i.e., corrosion fatigue characteristics).

Examples of the corrosive environment include an environment inside a tire into which moisture has penetrated.

The concept of "adhesion to rubber" includes both adhesion between a plated steel wire and rubber before aging (hereinafter, also referred to as "initial adhesion") and adhesion between a plated steel wire and rubber after aging (hereinafter, referred to as "aged adhesion").

In the examples described below, the adhesion after aging was evaluated by evaluating durability of a rubber composite containing a plated steel wire and rubber.

In the plated steel wire of the disclosure, the following reasons may be considered as a reason for achieving the above described effect, but the disclosure is not limited by the following reasons.

It is considered that Al in the brass plating layer is oxidized to form a passive film made of Al oxide on the surface of a brass plating layer. It is considered that the passive film improves corrosion resistance of the plated steel wire in a corrosive environment, thereby improving corrosion fatigue characteristics of the plated steel wire.

It is considered that such a passive film contributes to securing aged adhesion between a plated steel wire and rubber by suppressing excessive diffusion of Cu from a brass plating layer to rubber after aging and suppressing excessive reaction progress between Cu and S.

It is considered that when a rubber composite containing a plated steel wire of the disclosure and rubber is vulcanized, Cu contained in the brass plating layer reacts with S contained in the rubber and a Cu sulfide layer is formed as an adhesive layer between the brass plating layer and the rubber. A moderately thick (i.e., not too thick) adhesive layer contributes to adhesion between a plated steel wire and rubber.

It is considered that an enriched layer (hereinafter, also referred to as "Al-Zn enriched layer") in which Al and Zn are enriched is formed between an adhesive layer (Cu sulfide layer) and a brass plating layer. It is considered that such an Al-Zn enriched layer improves corrosion resistance of a plated steel wire under corrosive environments, which in turn improves corrosion fatigue characteristics.

It is considered that such an Al-Zn enriched layer contributes to securing aged adhesion between a plated steel wire and rubber by suppressing excessive diffusion of Cu from a brass plating layer to rubber after aging and suppressing excessive reaction progress between Cu and S.

In the plated steel wire of the disclosure, the Al content of 5.5% by mass or more in a brass plating layer contributes to improvement of corrosion fatigue characteristics.

When the Al content in the brass plating layer is less than 5.5% by mass, the corrosion fatigue characteristics of the plated steel wire is deteriorated in some cases. The reason for this is considered to be that when the Al content in the brass plating layer is less than 5.5% by mass, formation of a passive film as described above and an Al-Zn enriched layer as described above becomes insufficient.

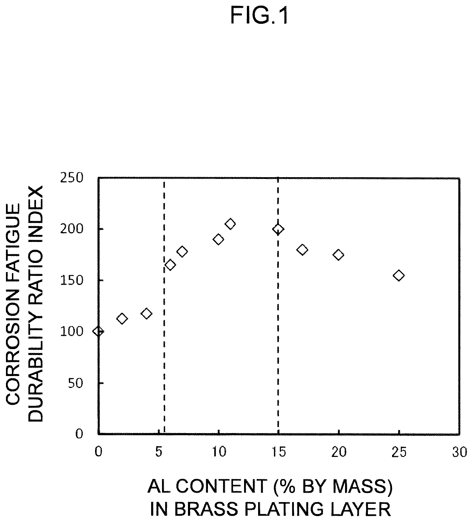

Fig. 1 is a graph showing an example of a relationship between an Al content in a brass plating layer and a corrosion fatigue durability ratio index in a plated steel wire including a brass plating layer made of Cu, Zn, Al, and impurities.

Here, the corrosion fatigue durability ratio index is an index indicating corrosion fatigue characteristics of a plated steel wire, and the larger the value, the better the corrosion fatigue characteristics of the plated steel wire. The corrosion fatigue durability ratio index will be described below in Examples.

The graph of Fig. 1 is an example of a plated steel wire that was wire-drawn, wherein the carbon content in a steel wire is 0.80%, the Cu content in the brass plating layer is 63% by mass, the thickness of the brass plating layer is 250 nm, and the diameter of the plated steel wire is 0.20 mm, in which the Al content in the brass plating layer is changed.

As shown in Fig. 1, it can be seen that the corrosion fatigue characteristics (i.e., the corrosion fatigue durability ratio index) of the plated steel wire improves in a region where the Al content in the brass plating layer is 5.5% by mass or more.

In the plated steel wire of the disclosure, the content of Al of 5.5% by mass or more in the brass plating layer contributes to ensuring adhesion (particularly aged adhesion) between a plated steel wire and rubber.

When the Al content in the brass plating layer is less than 5.5% by mass, aged adhesion between a plated steel wire and rubber decreases in some cases. The reason for this is considered to be that formation of a passive film as described above and an Al-Zn enriched layer as described above becomes insufficient and as a result excessive diffusion of Cu from a brass plating layer to rubber occurs, and an excessive reaction between Cu and S proceeds.

In the plated steel wire of the disclosure, a fact that the Al content in a brass plating layer is less than 15% by mass contributes to securing adhesion of the plated steel wire to rubber.

When the Al content in the brass plating layer is 15% by mass or more, adhesion of the plated steel wire to rubber decreases in some cases. The reason for this is considered to be that when the Al content in the brass plating layer is 15% by mass or more, a passive film as described above and an Al-Zn enriched layer becomes too thick, thereby inhibiting a reaction between Cu in the brass plating layer and S in the rubber.

It is considered that when the Al content in the brass plating layer is 15% by mass or more, cracks in the brass plating layer are generated by pitting corrosion and as a result adhesion of the plated steel wire to rubber decreases in some cases.

In the plated steel wire of the disclosure, the Cu content in a brass plating layer of 60% by mass or more contributes to ensuring adhesion of the plated steel wire to rubber.

When the Cu content in the brass plating layer is less than 60% by mass, the adhesion between the plated steel wire and rubber decreases in some cases. This is considered to be due to the fact that a reaction between Cu in the brass plating layer and S in the rubber becomes insufficient due to too little Cu and formation of the adhesive layer (Cu sulfide layer) becomes insufficient.

In the plated steel wire of the disclosure, the Cu content of less than 70% by mass or more in a brass plating layer also contributes to ensuring adhesion between the plated steel wire and rubber.

When the Cu content in the brass plating layer is 70% by mass or more, the adhesion between the plated steel wire and rubber decreases in some cases. This is considered to be because when the Cu content is 70% by mass or more, the above-described adhesive layer (Cu sulfide layer) becomes too thick and adhesion between the plated steel wire and the rubber is rather deteriorated.

In the plated steel wire of the disclosure, the average thickness of the brass plating layer of 180 nm or more contributes to improvement in corrosion fatigue characteristics of the plated steel wire and ensuring of adhesion between the plated steel wire and rubber.

When the average thickness of the brass plating layer is less than 180 nm, corrosion fatigue characteristics of the plated steel wire may deteriorate, or adhesion between the plated steel wire and rubber may decrease. This is considered to be because when the average thickness of the brass plating layer is less than 180 nm, a portion which is not covered with a brass plating layer and/or a portion where the brass plating layer is too thin is likely to be generated locally on the outer peripheral surface of the steel wire.

In the plated steel wire of the disclosure, the average thickness of the brass plating layer of 2,000 nm or less contributes to ensuring adhesion between the plated steel wire and rubber.

When the average thickness of the brass plating layer is more than 2,000 nm, the adhesion between the plated steel wire and the rubber decreases in some cases. This is considered to be due to: that a crack is likely to be generated in the brass plating layer; that as the amount of Cu involved in an adhesion reaction between the brass plating layer and rubber increases, the above-described adhesive layer (Cu sulfide layer) becomes too thick and the adhesion strength decreases due to coarsening of crystals; or the like.

The plated steel wire of the disclosure is preferably used as a reinforcing material for rubber-containing members because adhesion to rubber is ensured and corrosion fatigue characteristics are excellent. Examples of the rubber-containing member include a tire, a hose, and a belt, and a tire is preferable.

The plated steel wire of the disclosure is particularly suitable as a material for steel cords or bead wires used for tires.

Hereinafter, the brass plating layer and the steel wire which are provided in the plated steel wire of the disclosure will be described.

< Brass Plating Layer >

The brass plating layer is a layer covering the outer peripheral surface of a steel wire, and is a layer made of Cu, Zn, Al, and impurities.

In the brass plating layer, the Cu content is from 60% by mass to less than 70% by mass, and the Al content is from 5.5% by mass to less than 15% by mass.

Herein, the Cu content, the Al content, and the Zn content are measured by the following method.

An alkaline solution in which 10% by mass ammonium persulfate is mixed with ammonia stock solution is prepared. The plated steel wire of the disclosure is immersed in the alkaline solution to dissolve a brass plating layer in the plated steel wire to obtain a solution. Each of the Cu concentration, the Zn concentration, and the Al concentration in the above-described solution is determined by ICP analysis (inductively coupled plasma optical emission spectrometry). Based on the obtained results, each of the Cu content, the Al content, and the Zn content is calculated under the condition that the total of Cu, Zn, and Al is assumed to be 100% by mass.

The Al content in the brass plating layer is from 5.5% by mass to less than 15% by mass, preferably from 5.5% by mass to 14.5% by mass, and more preferably from 6.0% by mass to 11% by mass.

The Cu content in the brass plating layer is from 60% by mass to less than 70% by mass, preferably from 61% by mass to 68% by mass, and more preferably from 63% by mass to 67% by mass.

In the brass plating layer, the balance except Cu and Al is Zn and impurities.

The Zn content in the brass plating layer is naturally a value obtained by subtracting the Cu content (% by mass) and the Al content (% by mass) from 100% by mass.

Here, the impurities are elements contained in raw materials of the brass plating layer or elements mixed in the brass plating layer in a manufacturing process, which are elements (i.e., elements other than Cu, Al, and Zn) not intentionally contained in the brass plating layer. Elements as impurities may be of one kind or of two or more kinds.

The average thickness of the brass plating layer is from 180 nm to 2,000 nm.

Herein, the average thickness of the brass plating layer is measured by the following method.

According to the method described above, each of the Cu content, the Al content, and the Zn content in the brass plating layer is measured. In the course of these measurements, the mass (W) of the brass plating layer per unit length of the plated steel wire is measured.

From the Cu content, the Al content, and the Zn content, the average specific gravity (p) of the brass plating layer is determined according to the following formula.

$$\rho = \rho_{Cu} \times W_{Cu} + \rho_{Zn} \times W_{Zn} + \rho_{Al} \times W_{Al}$$

Here, $\rho$ represents the average specific gravity of the brass plating layer, $\rho_{Cu}$ represents the specific gravity of Cu, $\rho_{Zn}$ represents the specific gravity of Zn, $\rho_{Al}$ represents the specific gravity of Al, $W_{Cu}$ represents the Cu content (% by mass) in the brass plating layer, $W_{Zn}$ represents the Zn content (% by mass) in the brass plating layer, and $W_{Al}$ represents the Al content (% by mass) in the brass plating layer.

Based on the average specific gravity ($\rho$) of the brass plating layer, the surface area (A) of the brass plating layer of the unit length, the mass (W) of the brass plating layer of the unit length, the average thickness (t) of the brass plating layer is obtained according to the following Formula (1).

$$t = W/(A \times \rho) \ldots \text{Formula (1)}$$

Here, t represents the average thickness of the brass plating layer, W represents the mass of the brass plating layer per unit length of the plated steel wire, A represents the surface area of the brass plating layer per unit length of the plated steel wire, and $\rho$ represents the average specific gravity of the brass plating layer.

From the viewpoint of further improving corrosion fatigue characteristics of the plated steel wire, the average thickness of the brass plating layer is preferably 200 nm or more, more preferably 250 nm or more, still more preferably 500 nm or more, and still more preferably more than 500 nm.

From the viewpoint of further improving adhesion between the plated steel wire and rubber, the average thickness of the brass plating layer is preferably 1850 nm or less, more preferably 1500 nm or less, and still more preferably 1000 nm or less.

An example of a method of forming a brass plating layer will be described below.

< Steel Wire >

In the plated steel wire of the disclosure, the steel wire is a steel wire (so-called "base metal") to be covered with the brass plating layer described above.

The chemical composition of the steel wire is not particularly limited, and from the viewpoint of ensuring the strength and ductility of the plated steel wire and more effectively exhibiting a reinforcing effect on rubber-containing members, a chemical composition composed of C: from 0.70 to 1.20% by mass, Si: from 0.15 to 0.55% by mass, Mn: from 0.20 to 0.60% by mass, P: 0.010% by mass or less, S: 0.010% by mass or less, Cr: from 0 to 0.35% by mass, and the balance: Fe and impurities is preferred.

< Preferred Diameter >

The diameter of the plated steel wire of the disclosure is not particularly limited.

From the viewpoint of productivity and flexibility of the plated steel wire, the diameter of the plated steel wire of the disclosure is preferably from 0.10 mm to 0.40 mm.

When the diameter of the plated steel wire is 0.10 mm or more, the productivity of the plated steel wire is further improved. The diameter of the plated steel wire is more preferably 0.12 mm or more, still more preferably 0.15 mm or more, and still more preferably 0.17 mm or more.

On the other hand, when the diameter of the plated steel wire is 0.40 mm or less, the flexibility of the plated steel wire is further improved. Therefore, for example, when a plated steel wire is used as a reinforcing material of a tire of an automobile, it is more excellent in the ride comfort of a car. In a case in which the plated steel wire of the disclosure is a plated steel wire obtained by wire drawing after formation of a brass plating layer, when the diameter of the plated steel wire of the disclosure is 0.40 mm or less, since the wire drawing ratio in wet wire drawing can be ensured higher, higher strength can be obtained by drawing strengthening. The diameter of the plated steel wire is preferably 0.38 mm or less, and more preferably 0.34 mm or less.

< Preferred Strength >

The strength of the plated steel wire of the disclosure is not particularly limited.

From the viewpoint of more effectively obtaining a reinforcing effect on rubber-containing members, the strength of the plated steel wire of the disclosure is preferably 3,200 MPa or more.

From the viewpoint of further reducing crack susceptibility and thereby obtaining a corrosion fatigue characteristic improving effect more effectively, the strength of the plated steel wire of the disclosure is preferably 4,300 MPa or less.

Herein, the strength of the plated steel wire means a tensile breaking stress in the longitudinal direction of the plated steel wire.

Herein, the strength of the plated steel wire means a value measured by the following method.

The diameter of a plated steel wire before a tensile test is measured with a micrometer, and the cross-sectional area of the plated steel wire before the tensile test is obtained.

Next, with respect to the plated steel wire of which the cross-sectional area was determined, a tensile test is carried out under the conditions of a distance between chucks: 100 mm and a cross head moving speed: 10 mm/min in accordance with JIS Z 2241 (2011) (in other words, a load was applied in the longitudinal direction of the plated steel wire), the maximum load until the plated steel wire breaks is measured. This tensile test is carried out under temperature conditions of from 20 to 25°C. Such a tensile test is carried out using, for example, Autograph manufactured by Shimadzu Corporation.

The tensile breaking stress in the longitudinal direction of the plated steel wire (i.e., the strength of the plated steel wire) is obtained by dividing the obtained maximum load by the cross-sectional area of the plated steel wire before the tensile test.

From the viewpoint of improving the strength of the plated steel wire, the plated steel wire of the disclosure is preferably a plated steel wire which was wire-drawn, that is, a plated steel wire obtained by wire drawing after formation of a brass plating layer on the outer peripheral surface of a steel wire.

Since the plated steel wire of the disclosure has adhesion to rubber ensured and is excellent in fatigue properties (i.e., corrosion fatigue characteristics) under a corrosive environment, the plated steel wire is preferably used as a reinforcing material for rubber-containing members. Examples of the rubber-containing members include a tire, a hose, and a belt, and a tire is preferable.

The plated steel wire of the disclosure is particularly suitable as a material for steel cords or bead wires used for tires.

[One Example of Method of Manufacturing Plated Steel Wire (Manufacturing Method X)]

Hereinafter, an example of a manufacturing method (manufacturing method X) for manufacturing the plated steel wire of the disclosure will be described.

The manufacturing method X is a method of manufacturing a plated steel wire obtained by wire drawing after forming a brass plating layer on the outer peripheral surface of a steel wire.

Hereinafter, a first plated steel wire means a plated steel wire obtained by wire drawing after formation of a brass plating layer, and a first steel wire and a first brass plating layer respectively mean a steel wire and a brass plating layer in the first plated steel wire.

Hereinafter, a second plated steel wire means a plated steel wire which is not wire-drawn after formation of a brass plating layer, and a second steel wire and a second brass plating layer respectively mean a steel wire and a brass plating layer in the second plated steel wire.

The manufacturing method X includes,
when the plated steel wire according to one example of the disclosure, the steel wire in the plated steel wire according to this example, and the brass plating layer in the plated steel wire according to the above example are a first plated steel wire, a first steel wire, and a first brass plating layer, respectively:

a process (hereinafter, also referred to as "second plated steel wire preparation process") of preparing a second plated steel wire including a second steel wire and a second brass plating layer composed of Cu, Zn, Al, and impurities, in which, when the total of Cu, Zn, and Al is assumed to be 100% by mass, the Cu content is from 60% by mass to less than 70% by mass, and the Al content is from 5.5% by mass to less than 15% by mass, and which covers the outer peripheral surface of the second steel wire; and
a process (hereinafter, also referred to as "wire drawing process") of obtaining the first plated steel wire including the first steel wire and the first brass plating layer by wire drawing the second plated steel wire.

According to manufacturing method X, as the first plated steel wire, it is possible to manufacture the plated steel wire of the disclosure which ensures adhesion to rubber and is excellent in corrosion fatigue characteristics.

The manufacturing method X is excellent in wire drawability for the second plated steel wire (i.e., a plated steel wire not wire-drawn after formation of a brass plating layer).

That the Al content in the second brass plating layer is 5.5% by mass or more, that the Cu content in the second brass plating layer is 60% by mass or more, and that the thickness of the first brass plating layer is from 180 nm to 2,000 nm are involved in an effect of wire drawability.

When the Al content in the second brass plating layer is 5.5% by mass or more, the wire drawability is improved. This is considered to be because when the Al content in the second brass plating layer is 5.5% by mass or more, an Al oxide film of sufficient thickness is formed on the surface of a die in contact with the second steel wire during wire drawing. It is considered that this Al oxide film reduces the friction between the second steel wire and the die, and as a result, the wire drawability is improved.

When the Cu content in the second brass plating layer is 60% by mass or more, the wire drawability is improved. This is considered to be because the second brass plating layer is suppressed from becoming too hard.

When the thickness of the first brass plating layer (i.e., the brass plating layer after wire drawing) is 180 nm or more, wire drawability is improved. This is considered to be because a phenomenon that part of the outer peripheral surface of the second steel wire is exposed during wire drawing is suppressed.

Another reason is considered to be that when the thickness of the first brass plating layer (i.e., the brass plating layer after wire drawing) is 180 nm or more, because the thickness of the second brass plating layer (i.e., the brass plating layer before drawing) is large to some extent, an effect of friction reduction by the above-described Al oxide film is effectively exhibited.

< Second Plated Steel Wire Preparation Process >

The second plated steel wire preparation process is a process of preparing a second plated steel wire including: a second steel wire; and a second brass plating layer composed of Cu, Zn, Al, and impurities, in which, when the total of Cu, Zn, and Al is assumed to be 100% by mass, the Cu content is from 60% by mass to less than 70% by mass, and the Al content is from 5.5% by mass to less than 15% by mass, and which covers the outer peripheral surface of the second steel wire.

The second plated steel wire preparation process may be a process of manufacturing a second plated steel wire or a process of merely preparing a preliminarily manufactured second plated steel wire.

Hereinafter, an example of a method of manufacturing the second plated steel wire will be described.

A hot rolled wire rod having a diameter of from 3 mm to 5.5 mm is used as a raw material, and this hot rolled wire rod is descaled, if necessary, then dry wire drawing is performed until the diameter becomes from 1 mm to 3 mm to obtain a second steel wire, and the obtained second steel wire is wound up to obtain a coil. Next, the second steel wire is fed out from the coil, and a patenting heat treatment is applied to the fed second steel wire. The second steel wire after the patenting heat treatment is further subjected to plating pretreatment such as descaling by acid pickling, or degreasing, if necessary.

A preferred embodiment of the chemical composition of the hot rolled wire rod and the second steel wire is the same as the preferred embodiment of the chemical composition of the steel wire described above.

In the process of obtaining the second steel wire from the hot rolled wire rod as the raw material, the chemical composition does not change. In other words, the chemical composition of the hot rolled wire rod as the raw material is maintained as it is in the second steel wire.

From the viewpoint of ensuring the strength and ductility of an eventually obtained first plated steel wire, as the metallographic structure of the second steel wire subjected to the patenting heat treatment described above, a metallographic structure having a pearlite area ratio of 95% or more is preferable.

Next, a second brass plating layer that covers the outer peripheral surface of the second steel wire (or the second steel wire subjected to the plating pretreatment) after the patenting heat treatment is formed.

The second brass plating layer can be formed by various methods. Examples of the method of forming the second brass plating layer include the following methods A to D.

These methods differ from a conventional method of forming a brass plating layer made of Cu, Zn, and impurities, in which neither an Al plating layer nor a Zn-Al composite plating layer is formed in that an Al plating layer or a Zn-Al composite plating layer is formed.

- Method A -

Method A is a method of forming a brass plating layer made of Cu, Zn, Al, and impurities by forming a Cu plating layer, a Zn plating layer, and an Al plating layer with an arrangement in the order of the Cu plating layer, the Zn plating layer, and the Al plating layer as seen from the outer peripheral surface side of the second steel wire (or an arrangement in the order of a Cu plating layer, an Al plating layer, and a Zn plating layer as seen from the outer peripheral surface side of the second steel wire) by electroplating on the outer peripheral surface of the second steel wire and then subjecting the Cu plating layer, the Zn plating layer, and the Al plating layer to a diffusion heat treatment.

In the diffusion heat treatment, Cu, Zn, and Al are alloyed, and a brass plating layer is formed.

The heat treatment temperature in the diffusion heat treatment is, for example, from 450°C to 550°C.

The heat treatment time in the diffusion heat treatment is, for example, from 5 seconds to 10 seconds.

Formation of the Cu plating layer can be carried out by using an aqueous plating bath containing copper pyrophosphate, copper sulfate, or the like.

Formation of the Zn plating layer can be carried out using an aqueous plating bath containing zinc sulfate, zinc chloride, or the like.

Formation of the Al plating layer can be carried out using a solvent type plating bath containing an aluminum chloride solution and dimethyl sulfone.

In Method A, the chemical composition of the brass plating layer can be adjusted by adjusting the ratio of the thickness of each of the Cu plating layer, the Zn plating layer, and the Al plating layer.

- Method B -

Method B is a method in which a Cu plating layer and a Zn plating layer (hereinafter, also referred to as "Zn-Al composite plating layer") in which Al particles are dispersed are formed by electroplating on the outer peripheral surface of the second steel wire with an arrangement in the order of the Cu plating layer and the Zn-Al composite plating layer as seen from the outer peripheral surface side of a steel wire, and then a diffusion heat treatment is performed on the Cu plating layer and the Zn-Al composite plating layer to form a second brass plating layer made of Cu, Zn, Al, and impurities.

An example of the condition of the diffusion heat treatment in Method B is the same as the example of the condition of the diffusion heat treatment in Method A.

Formation of the Cu plating layer in Method B can be carried out by using an aqueous plating bath containing copper pyrophosphate, copper sulfate, or the like.

Formation of the Zn - Al composite plating layer can be carried out using an aqueous plating bath containing zinc sulfate, zinc chloride, and the like and having Al particles dispersed therein.

The particle diameter of Al particles is not particularly limited, and is preferably from 0.1 $\mu$m to 1 $\mu$m from the viewpoint of dispersibility of Al particles and the like.

The Al particles are not necessarily spherical, and may be, for example, a flat shape (for example, a flat shape having a thickness of 1 $\mu$m or less).

In Method B, the chemical composition of the brass plating layer can be adjusted by adjusting the ratio of the thickness of the Cu plating layer and the thickness of the Zn-Al composite plating layer, the content of Al particles in the plating bath, the current density in each electroplating, or the like.

- Method C-

Method C is a method in which a Cu plating layer is formed by electroplating on the outer peripheral surface of the second steel wire, then a Zn-Al composite plating layer is formed by solution plasma, and then a diffusion heat treatment is applied to the Cu plating layer and the Zn-Al composite plating layer to form a second brass plating layer made of Cu, Zn, Al, and impurities.

An example of the condition of the diffusion heat treatment in Method C is the same as the example of the condition of the diffusion heat treatment in Method A.

Formation of the Cu plating layer in Method C can be carried out by using an aqueous plating bath containing copper pyrophosphate, copper sulfate, or the like.

In Method C, the chemical composition of the brass plating layer can be adjusted by adjusting the ratio of the thickness of the Cu plating layer and the thickness of the Zn-Al composite plating layer, the Al concentration in the solution plasma, or the like.

- Method D -

Method D is a method in which a Cu plating layer is formed by electroplating on the outer peripheral surface of the second steel wire, then a molten Zn-Al alloy plating is applied thereto, and then a diffusion heat treatment is performed to form a second brass plating layer made of Cu, Zn, Al, and impurities.

The molten Zn-Al alloy plating is performed, for example, by immersing the second steel wire, on which a Cu plating layer has been formed, in a molten Zn-Al alloy plating bath at about 450°C. As a result, the Zn-Al alloy plating layer is formed, and at the same time, the Zn-Al alloy is alloyed with Cu to form a second brass plating layer made of Cu, Zn, Al, and impurities.

In this method D, it is preferable to increase the activity of the Cu plating layer. Examples of a method of enhancing the activity of the Cu plating layer include a method of subjecting a second steel wire formed, on which a Cu plating layer has been formed, to a flux treatment containing Zn chloride or ammonium chloride as a main component.

An example of the condition of the diffusion heat treatment in Method D is the same as the example of the condition of the diffusion heat treatment in Method A.

Formation of the Cu plating layer in Method D can be carried out by using an aqueous plating bath containing copper pyrophosphate, copper sulfate, or the like.

In Method D, the chemical composition of the brass plating layer can be adjusted by adjusting the ratio of the thickness of the Cu plating layer and the thickness of the Zn-Al composite plating layer, the Al concentration in the molten Zn-Al alloy plating bath, or the like.

< Wire Drawing Process >

A wire drawing process is a process of obtaining a first plated steel wire including a first steel wire and a first brass plating layer by subjecting a second steel wire to wire drawing.

A first plated steel wire excellent in strength is obtained by wire drawing in this process.

A first steel wire is obtained from a second steel wire by wire drawing in this process (that is, wire drawing on the entire second plated steel wire), and a first brass plating layer is obtained from a second brass plating layer.

The chemical composition of the second brass plating layer does not change by wire drawing in this process. Therefore, the chemical composition of the second brass plating layer is maintained as it is also in the first brass plating layer.

The chemical composition of the second steel wire does not change by wire drawing in this process. Therefore, the chemical composition of the second steel wire is maintained as it is also in the first steel wire.

In this process, it is preferable to obtain the first plated steel wire having the above-described diameter by wire drawing the second plated steel wire to a diameter of from 0.10 mm to 0.40 mm.

A more preferable range of the diameter is as described in the section "Plated Steel Wire".

From the viewpoint that it is easy to obtain the first plated steel wire having the above-described preferable diameter, the diameter of the second steel wire in the second plated steel wire is preferably from 1 mm to 3 mm.

As wire drawing in a wire drawing process, wet wire drawing is preferable, slip type wet wire drawing or non-slip type wet wire drawing is more preferable, and non-slip type wet wire drawing is still more preferable.

In the manufacturing method X, even when wire drawing in a wire drawing process is slip type wet wire drawing, excellent wire drawability is ensured by a Cu content in the second brass plating layer of 60% by mass or more and a thickness of the first brass plating layer of 180 nm or more.

In the manufacturing method X, when wire drawing in a wire drawing process is non-slip type wet wire drawing, the wire drawability is further improved as compared with the case of a slip type wet wire drawing.

As non-slip type wet wire drawing, a known method can be applied.

Non-slip type wet wire drawing is carried out, for example, by using a wet lubricant for improving the lubricating performance between a die and the second plated steel wire in such a manner not to cause a slip between a drawing capstan and the second plated steel wire.

Particularly preferably, in the manufacturing method X, wet wire drawing is carried out under the conditions that wire drawing in a wire drawing process is non-slip type wet wire drawing and a back tension acting on the second plated steel wire (hereinafter, also referred to as "back tension ratio") is from 5% to 20% of the breaking load of the second plated steel wire.

When the back tension ratio is 20% or less, the wire drawability is further improved.

This is considered to be because a load on the second plated steel wire during wire drawing is further reduced when the back tension ratio is 20% or less, which further reduces breaking of the second plated steel wire during drawing.

It is also considered that the wire drawability is further improved when the back tension ratio is 20% or less because an Al oxide film on the surface of the above-described die is likely to be maintained when the back tension ratio is 20% or less.

When the back tension ratio is 5% or more, the productivity of wet wire drawing process improves.

The back tension ratio is more preferably from 5% to 18%, still more preferably from 6% to 18%, and still more preferably from 8% to 15%.

A method of controlling the back tension is not particularly limited, and a known method can be applied.

Examples of the method of controlling the back tension include a dancer back tension control and a motor type back tension control.

Among them, from the viewpoint that the back tension can be controlled in real time and the back tension can be controlled with higher accuracy, a dancer type control is preferable.

[Steel Cord]

Examples of the steel cord of the disclosure includes the plated steel wire of the disclosure as described above.

The steel cord of the disclosure is manufactured by, for example, twisting a plurality of plated steel wires including the plated steel wire of the disclosure. Here, all of the plurality of plated steel wires may be the plated steel wire of the disclosure, or only some of the plurality of plated steel wires may be the plated steel wire of the disclosure.

The steel cord of the disclosure is embedded in a tire, and functions as a reinforcing material for tires.

The steel cord of the disclosure ensures adhesion to tires, and is excellent in corrosion fatigue characteristics. Therefore, the durability of a tire can be improved by the steel cord of the disclosure.

[Rubber Composite]

The rubber composite of the disclosure includes: the plated steel wire of the disclosure as described above or the steel cord of the disclosure as described above; and rubber.

The rubber composite of the disclosure includes the plated steel wire of the disclosure having excellent corrosion fatigue characteristics or the steel cord of the disclosure having excellent corrosion fatigue characteristics, and ensures adhesion between the plated steel wire of the disclosure or the steel cord of the disclosure and rubber.

The rubber composite of the disclosure is manufactured, for example, by embedding the plated steel wire of the disclosure described above or the steel cord of the disclosure described above in rubber or a rubber composition and then vulcanizing.

Examples of the rubber composition include a composition containing rubber, carbon black, sulfur, zinc oxide, and various other additives.

Examples of the rubber composite include a tire, a hose, and a belt.

In the case of manufacturing a tire as the rubber composite of the disclosure, for example, the steel cord of the disclosure is embedded in sheet-like unvulcanized rubber made of a rubber composition to obtain a reinforcing belt structure. Thereafter, the reinforcing belt structure and a tire constituent member are bonded together, set in a vulcanizer, and subjected to a vulcanization treatment by pressing, heating, or the like to obtain a tire as a rubber composite. A tire having excellent durability can thus be manufactured.

Examples

Examples of the disclosure will be described below, but the disclosure is not limited thereto.

In the following, the term "plated steel wire" means a first plated steel wire (i.e., a plated steel wire that has been wire-drawn), and the term "second plated steel wire" means a plated steel wire that has not been wire-drawn as described above.

[Examples 1 to 14, and Comparative Examples 1 to 12]

According to the manufacturing method X described above, a plated steel wire was manufactured by subjecting a second plated steel wire to wet wire drawing. Details are described below.

< Manufacturing of Second Plated Steel Wire (Second Plated Steel Wire Preparation Process) >

Hot rolled wire rods having the chemical composition represented by Steel A to Steel D in Table 1 and having a diameter of 5.5 mm were prepared as raw materials.

In Table 1, "-" indicates that the element is not contained. In each steel, the balance excluding the elements shown in Table 1 is Fe and impurities.

[Table 1]

| Steel | Chemical Composition (% by mass) | | | | | |
|---|---|---|---|---|---|---|
| | c | Si | Mn | P | s | Cr |
| A | 0.82 | 0.18 | 0.48 | 0.007 | 0.007 | - |
| B | 0.92 | 0.51 | 0.31 | 0.008 | 0.009 | 0.31 |
| C | 1.13 | 0.20 | 0.30 | 0.008 | 0.009 | 0.21 |
| D | 0.72 | 0.23 | 0.47 | 0.007 | 0.006 | - |

The chemical composition of the hot rolled wire rod used in each Example and each Comparative Example is as shown in "Steel of Steel Wire" in Table 2.

After removing scales by pickling a hot rolled wire rod, the rod was treated with lime and then subjected to dry wire drawing using a dry lubricant mainly composed of Na stearate until the second steel wire having a diameter of 1.5 mm was obtained. The metallographic structure of the second steel wire was transformed into austenite by introducing the obtained second steel wire into a heating furnace at 1,000°C and holding the wire for 45 seconds, and then, the second plated steel wire was subjected to a patenting treatment in which the wire was soaked in a lead bath at 600°C for 7 seconds.

The second steel wire subjected to the patenting treatment was subjected to electrolytic pickling with sulfuric acid and electrolytic degreasing with an alkaline solution.

In Examples 1 to 14 and Comparative Examples 4 to 12, the second steel wire subjected to electrolytic pickling and electrolytic degreasing was subjected to Cu electroplating using a copper pyrophosphate plating bath, and then, Zn-Al composite electroplating was carried out in a dispersion liquid in which Al particles were dispersed in a zinc sulfate bath. As a result, a Cu plating layer and an Al particle-dispersed Zn plating layer were sequentially formed on the outer peripheral surface of the second steel wire subjected to electrolytic pickling and electrolytic degreasing. Next, the second steel wire on which the Cu plating layer and the Al particle-dispersed Zn plating layer were formed was heated at 480°C for 7 s. In this way, a second brass plating layer made of Cu, Zn, Al, and impurities was formed by subjecting the Cu plating layer and the Al particle-dispersed Zn plating layer to diffusion heat treatment.

As described above, the second plated steel wires of Examples 1 to 14 and Comparative Examples 4 to 12, each of which including the second steel wire and a second brass plating layer made of Cu, Zn, Al, and impurities and covering the outer peripheral surface of the second steel wire, were obtained.

In Examples 1 to 14 and Comparative Examples 4 to 12, the Cu content and the Al content in the brass plating layer were adjusted by changing the ratio of the thickness of the Cu plating layer and the Al particle-dispersed Zn plating layer and the content of Al particles in the dispersion used for the Zn-Al composite electroplating.

In Comparative Examples 1 to 3, the second steel wire subjected to electrolytic pickling and electrolytic degreasing was subjected to Cu electroplating using a copper pyrophosphate plating bath, and then, to Zn electroplating using a zinc sulfate bath (specifically, a zinc sulfate bath not containing Al particles). As a result, a Cu plating layer and a Zn plating layer (specifically, a Zn plating layer not containing Al particles) were sequentially formed on the outer peripheral surface of the steel wire subjected to electrolytic pickling and electrolytic degreasing. Next, the steel wire on which the Cu plating layer and the Zn plating layer were formed was heated at 480°C for 7 s. In this way, a brass plating layer made of Cu, Zn, and impurities was formed by subjecting the Cu plating layer and the Zn plating layer to the diffusion heat treatment.

As described above, the second plated steel wires of Comparative Examples 1 to 3, each of which includes the second steel wire and a second brass plating layer made of Cu, Zn, and impurities and covering the outer peripheral surface of the second steel wire, were obtained.

< Manufacturing of Plated Steel Wire (Wire Drawing Process) >

The plated steel wire having the diameter shown in Table 2 was obtained by subjecting the second plated steel wire to wet wire drawing using an emulsion type wet lubricant (wire drawing process). The wire drawing speed at an eventual diameter (i.e., the diameter shown in Table 2) was 100 m/min.

Here, wet wire drawing in Examples 1 to 11, 13, and 14, and Comparative Examples 4 to 12 was carried out using a non-slip type wet wire drawing machine while controlling the back tension acting on the second plated steel wire by a dancer type torque control. The back tension ratio in these Examples and Comparative Examples (i.e., the ratio (%) of the back tension acting on the second plated steel wire to the breaking load of the second plated steel wire during wet wire drawing) is as shown in Table 2.

Wet wire drawing in Example 12 and Comparative Examples 1 to 3 was a slip type wet wire drawing.

The plated steel wire of Comparative Example 1 is a conventional typical plated steel wire.

- Evaluation of Wire drawability -

By checking whether or not a break occurred during wet wire drawing to obtain a plated steel wire with a length of 1,000 m at a wire drawing speed of 100 m/min at an eventual diameter in wire drawing, wire drawability in each Example and each Comparative Example was evaluated.

Here, a case in which a break did not occur was determined as "A", and a case in which a break occurred even once was determined as "B". "A" means excellent wire drawability compared to "B".

The results are shown in Table 2.

< Measurement of Cu Content and Al Content in Brass Plating Layer >

According to the method described above, the Cu content and the Al content were calculated in a case in which the total of Cu, Zn, and Al was assumed to be 100% by mass in the brass plating layer.

The results are shown in Table 2.

In Table 2, the Cu content (63% by mass) in Comparative Example 1 is a Cu content in a conventional typical brass plating layer.

< Measurement of Average Thickness of Brass Plating Layer >

The average thickness of the brass plating layer in the plated steel wire was measured by the method described above.

The results are shown in Table 2.

< Strength of Plated Steel Wire >

The strength of the plated steel wire obtained above was measured by the method described above. For a tensile tester, AUTOGRAPH manufactured by Shimadzu Corporation was used.

As a result, the plated steel wires of Examples 1 to 14 and Comparative Examples 1 to 7 and 9 to 12 had a strength of 3,200 MPa to 4,300 MPa, and the plated steel wire of Comparative Example 8 had a strength of less than 2,800 MPa.

< Corrosion Fatigue Characteristics of Plated Steel Wire >

The corrosion fatigue characteristics of the plated steel wire were evaluated by carrying out a rotating-bending fatigue test described below.

The rotating-bending fatigue test was carried out under various load stresses $\sigma$ using a sample for rotating-bending fatigue test cut out from the plated steel wire obtained above.

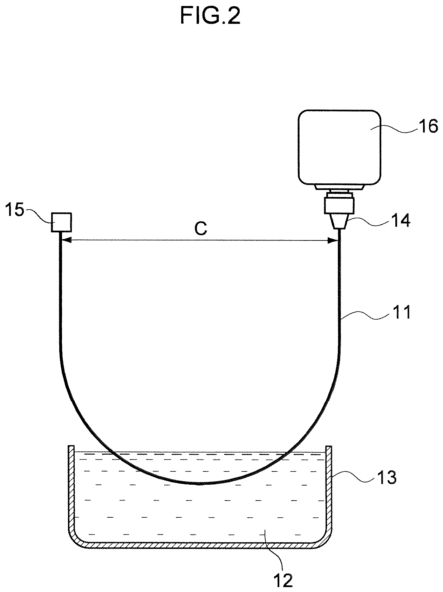

Fig. 2 is a diagram schematically showing an outline of a rotating-bending fatigue test in an evaluation of corrosion fatigue characteristics of a plated steel wire.

As shown in Fig. 2, the rotating-bending fatigue test was carried out using a hunter fatigue tester (manufactured by TOKYO ROPE MFG. CO., LTD.) including a rotary motor 16 for axially rotating one end of a sample 11 for a rotating-bending fatigue test, a chuck 14 directly connected to the rotary motor 16 for fixing one end of the sample 11, and a bushing 15 for fixing the other end of the sample 11.

Specifically, one end and the other end of the sample 11 bent into a U shape were fixed to the chuck 14 and the bushing 15, respectively. Here, a distance C between the chuck 14 and the bushing 15 was changed in accordance with a load stress $\sigma$ in the rotating-bending fatigue test (see Formula (2) described below). The length L of the sample 11 was also changed in accordance with a load stress $\sigma$ in the rotating-bending fatigue test (see Formulas (2) and (3) described below). A bent portion of the sample 11 bent into a U shape was immersed in an etchant 12 stored in a corrosion-proof tank 13 at an immersion depth of 20 mm. As the etchant 12, an aqueous solution containing NaCl (0.03% by mass), $NaNO_3$ (0.06% by mass), and $Na_2SO_4$ (0.09% by mass) was used.

In the above state, the number of repetitions until breaking was determined by rotating the one end of the sample 11 with the rotation motor 16 under conditions of a predetermined load stress $\sigma$ and a rotation speed 3,000 rotations per minute (rpm) and measuring time until the sample 11 was broken.

Here, the distance C between the chuck 14 and the bushing 15 and the length L of the sample 11 were determined by the following Formula (2) and the following Formula (3).

$$C = 1.19 \times E \times d/\sigma \ldots \text{Formula (2)}$$

$$L = 2.19 \times C + \text{chuck insertion length (66 mm)} \ldots \text{Formula (3)}$$

In Formulas (2) and (3), C represents the distance between the chuck 14 and the bushing 15, E represents Young's modulus (= 205,940 MPa), d represents the diameter of the sample 11 (i.e., the diameter of the plated steel wire), $\sigma$ represents a load stress of the rotating-bending fatigue test, and L represents the length of the sample 11.

The above rotating-bending fatigue test was performed at a load stress $\sigma$ for each load stress $\sigma$ in increments of 100 MPa in the range of from 200 MPa to 1,400 MPa.

Based on the obtained results, an S-N diagram showing the relationship between the load stress $\sigma$ and the number (life) of repetitions until breaking was prepared.

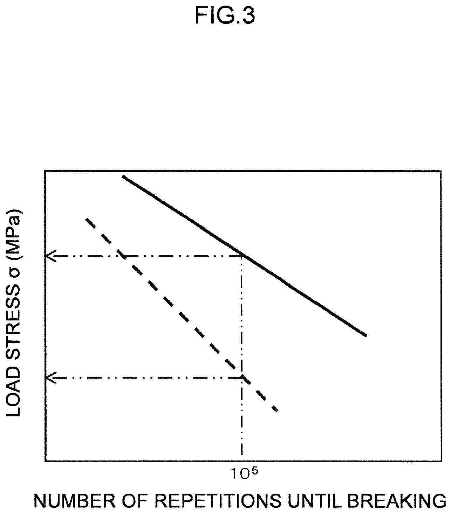

Fig. 3 is a diagram conceptually showing an S-N diagram in one example of the plated steel wire of the disclosure and an S-N diagram in one example of a conventional Cu-Zn brass plating.

In Fig. 3, a solid line is an S-N diagram of one example of the plated steel wire of the disclosure, and a broken line is an S-N diagram of one example of a conventional Cu-Zn brass plating.

From the obtained S-N diagram, a load stress (see a double-dotted chain arrow in Fig. 3; hereinafter, referred to as "$10^5$ times load stress") at a repetition number of $10^5$ was obtained, and furthermore, the durability ratio was determined as a value (i.e., $10^5$ times load stress/tensile breaking stress) obtained by dividing $10^5$ times load stress by the tensile breaking stress.

Next, the durability ratio (relative value) in each of Examples and Comparative Examples was obtained when the durability ratio in Comparative Example 1 was 100, and the obtained relative value was taken as the corrosion fatigue durability ratio index in each of Examples and Comparative Examples. The larger the corrosion fatigue durability ratio index was, the more excellent the corrosion fatigue characteristics were.

The results are shown in Table 2.

< Adhesion between Plated Steel Wire and Rubber >

Adhesion between a plated steel wire and rubber was evaluated by evaluating the adhesion index and the durability of a rubber composite described below.

(Adhesion Index)

From the plated steel wire obtained above, seven samples were cut out.

A steel cord with a length of 20 m and having a twist configuration of "1 + 6" was prepared by twisting a sheath around a core at a pitch of 10 mm with one of the seven samples as the core and six samples as the sheath.

Five steel cord pieces each having a length of 100 mm were cut out from the steel cord having a length of 20 m obtained above.

One end of each of the five steel cord pieces cut out was sandwiched by two sheets of unvulcanized rubber having the following composition, and in this state, hot pressing was performed under the conditions of a temperature of 160°C, a pressing force of 10 MPa, and a pressing time of 18 minutes. With this hot pressing, five steel cord pieces and two sheets of unvulcanized rubber were integrated, and unvulcanized rubber was vulcanized to obtain a rubber composite composed of rubber and five steel cord pieces.

- Composition of Unvulcanized Rubber -

- Natural rubber ... 100 parts by mass
  (Ribed smoked sheet rubber 1 (RSS #1))
- SRF carbon ... 50 parts by mass
  (Manufactured by Tokai Carbon Co., Ltd., trade name SEAST G-S)
- Antioxidant ... 1 part by mass
  (Manufactured by OUCHI SHINKO CHEMICAL INDUSTRIAL CO., LTD., trade name NOCRAC 810NA)
- Zinc oxide ... 8 parts by mass

- Stearic acid ... 2 parts by mass
- Sulfur ... 5 parts by mass
- Crosslinking accelerator ... 0.3 parts by mass
  (Manufactured by OUCHI SHINKO CHEMICAL INDUSTRIAL CO., LTD., trade name NOCCELER CZ)
- Cobalt naphthenate ... 3 parts by mass

A rubber composite had a structure in which one end portion (12 mm in length) of each of the five steel cord pieces was embedded in the center in the thickness direction of rubber having a length of 60 mm, a width of 12 mm, and a thickness of 10 mm and the balance (88 mm in length) protruded from the rubber. Specifically, the length direction of each of the five steel cord pieces was made parallel to the width direction of the rubber in such a manner that one end portion (12 mm in length) of each of the five steel cord pieces was embedded over the entire width of the rubber having a width of 12 mm. The five steel cord pieces were arranged at intervals of 10 mm in the length direction of the rubber.

Five steel cord pieces were withdrawn from the rubber composite within 24 hours from the completion of the hot pressing (i.e., vulcanization treatment), and the maximum value of an extraction load at the time of withdrawing each steel cord piece was measured. Arithmetic maen of the obtained five maximum values was calculated, and the obtained arithmetic mean value was taken as the maximum withdrawing load in each Example and each Comparative Example.

The maximum drawing load (relative value) in each of Examples and Comparative Examples was determined when the maximum withdrawing load in Comparative Example 1 was set to 100, and the obtained relative value was taken as the adhesion index in each of Examples and Comparative Examples.

The results are shown in Table 2.

The greater the adhesion index, the more excellent the initial adhesion between the plated steel wire and rubber.

(Durability of Rubber Composite)

A steel cord piece having a length of 1,000 mm was cut out from the steel cord having a length of 20 m prepared in the evaluation of the adhesion index described above.

A portion of the obtained steel cord piece having a length of 1,000 mm, which was approximately at the center in the longitudinal direction (230 mm in length), was sandwiched between two unvulcanized rubbers having the above composition, and in this state, hot pressing was carried out under the conditions of a temperature of 160°C, a pressure of 10 MPa, and a pressing time of 18 minutes. By this hot pressing, the steel cord piece and two sheets of unvulcanized rubber were integrated, a vulcanization treatment of the unvulcanized rubber was performed, and a rubber composite for evaluating durability composed of the rubber and the steel cord piece was manufactured.

A rubber composite for evaluating durability had a structure in which a portion having a length of 230 mm at the substantially central portion in the longitudinal direction of the steel cord piece was covered with rubber having a length of 230 mm, a width of 15 mm, and a thickness of 2 mm. Here, the longitudinal direction of the steel cord piece is parallel to the longitudinal direction of the rubber, and the steel cord piece passes through the central portion in the width direction of the rubber, and the central portion in the thickness direction and penetrates the rubber.

Within 24 hours from the completion of the hot pressing (i.e., vulcanization treatment), a 3-roller fatigue test was repeated, in which bending strain was repeatedly imparted to the rubber composite for evaluating durability by three rollers of 25 mm in diameter using 3-Roller Fatigue Tester (manufactured by TOKYO ROPE MFG. CO., LTD.). Specifically, bending strain by three rolls was repeatedly applied to a rubber covered portion (i.e., portion where a steel cord piece is covered with rubber) in a state in which a load of 10% of the breaking load of the steel cord piece was applied to the entire longitudinal direction of the steel cord piece in a rubber composite for evaluating durability, and the number of repetitions of bending strain until the rubber covered portion was broken (hereinafter, also referred to as "number of repetitions before immersion") was measured.

For details of the 3-roller fatigue test, see, for example, paragraphs 0043, 0044, and Fig. 7 of JP-A No. 2005-36356. In each of Examples and Comparative Examples herein, the stroke width of the three rollers was set to 82.6 mm, and the diameter of the three rollers was 25 mm.

Separately, a rubber composite for evaluating durability was immersed in distilled water at a water temperature of 80°C for 3 days within 24 hours from the completion of hot pressing (i.e., vulcanization treatment), and the rubber composite for evaluating durability after deterioration was prepared. For this rubber composite for evaluating durability after deterioration, the number of times of bending strain repetition (hereinafter, also referred to as "number of repetitions after immersion") until the rubber-covered portion was broken was measured in a similar manner to the number of repetitions before immersion.

Based on these measurement results, the ratio (%) of the number of repetitions of breaking after immersion to the number of repetitions of breaking before immersion was determined, and the durability of the rubber composite was evaluated in accordance with the following evaluation criteria.

The results are shown in Table 2.

In the following evaluation criteria, "A", is the most excellent durability of a rubber composite. Excellent durability of the rubber composite indicates that adhesion between rubber and a plated steel wire in the rubber composite is well maintained even when the rubber composite was aged.

- Evaluation Criteria of Durability of Rubber Composite -

A: The ratio (%) of the number of repetitions of breaking after immersion to the number of repetitions of breaking before immersion was 80% or more.
B: The ratio (%) of the number of repetitions of breaking after immersion to the number of repetitions of breaking before immersion was from 60% to less than 80%.
C: The ratio (%) of the number of repetitions of breaking after immersion to the number of repetitions of breaking before immersion was less than 60%.

[Table 2]

| | Plated steel wire | | | | | Evaluation of plated steel wire | | | Wet wire drawing | | |
| --- | --- | --- | --- | --- | --- | --- | --- | --- | --- | --- | --- |
| | Steel of steel wire | brass plating layer | | | Diameter (mm) | Corrosion fatigue characteristics | Adhesion to rubber | | Type | Back tension ratio (%) | Wire drawability |
| | | Cu content (% by mass) | Al content (% by mass) | Average thickness (nm) | | Corrosion fatigue durability ratio index | Adhesion index | durability of rubber composite | | | |
| Example 1 | A | 61.0 | 6.0 | 190 | 0.20 | 155 | 95 | B | Non-slip | 6 | A |
| Example 2 | A | 61.0 | 11.0 | 1850 | 0.20 | 200 | 85 | A | Non-slip | 6 | A |
| Example 3 | A | 61.0 | 14.5 | 250 | 0.20 | 170 | 80 | A | Non-slip | 10 | A |
| Example 4 | A | 63.0 | 11.0 | 210 | 0.20 | 180 | 75 | A | Non-slip | 10 | A |
| Example 5 | c | 61.0 | 6.0 | 500 | 0.20 | 175 | 75 | A | Non-slip | 10 | A |
| Example 6 | B | 63.0 | 6.0 | 500 | 0.20 | 175 | 75 | A | Non-slip | 10 | A |
| Example 7 | D | 61.0 | 6.0 | 500 | 0.15 | 180 | 75 | A | Non-slip | 10 | A |
| Example 8 | c | 63.0 | 11.0 | 1000 | 0.34 | 195 | 75 | A | Non-slip | 18 | A |
| Example 9 | D | 61.0 | 11.0 | 250 | 0.12 | 165 | 85 | A | Non-slip | 5 | A |
| Example 10 | C | 63.0 | 5.5 | 500 | 0.38 | 160 | 90 | A | Non-slip | 18 | A |
| Example 11 | B | 63.0 | 6.0 | 190 | 0.18 | 145 | 95 | B | Non-slip | 10 | A |
| Example 12 | A | 63.0 | 6.0 | 500 | 0.20 | 180 | 70 | A | Slip | - | A |
| Example 13 | A | 68.0 | 11.0 | 210 | 0.20 | 175 | 70 | A | Non-slip | 10 | A |

| | Steel of steel wire | Plated steel wire | | | | Evaluation of plated steel wire | | | Wet wire drawing | | |
|---|---|---|---|---|---|---|---|---|---|---|---|
| | | brass plating layer | | | Diameter (mm) | Corrosion fatigue characteristics | Adhesion to rubber | | Type | Back tension ratio (%) | Wire drawability |
| | | Cu content (% by mass) | Al content (% by mass) | Average thickness (nm) | | Corrosion fatigue durability ratio index | Adhesion index | durability of rubber composite | | | |
| Example 14 | A | 61.0 | 11.0 | 1500 | 0.20 | 180 | 80 | A | Non-slip | 10 | A |
| Comparative Example 1 | A | 63.0 | 0.0 | 210 | 0.20 | 100 | 100 | C | Slip | - | A |
| Comparative Example 2 | A | 58.0 | 0.0 | 210 | 0.20 | 100 | 50 | C | Slip | - | B |
| Comparative Example 3 | A | 72.0 | 0.0 | 210 | 0.20 | 100 | 75 | c | Slip | - | A |
| Comparative Example 4 | A | 65.0 | 4.5 | 250 | 0.20 | 130 | 75 | c | Non-slip | 10 | A |
| Comparative Example 5 | A | 65.0 | 16.5 | 250 | 0.12 | 150 | 40 | c | Non-slip | 10 | A |
| Comparative Example 6 | A | 65.0 | 6.0 | 2150 | 0.20 | 165 | 90 | c | Non-slip | 6 | A |
| Comparative Example 7 | A | 65.0 | 6.0 | 170 | 0.20 | 105 | 60 | C | Non-slip | 25 | B |
| Comparative Example 8 | A | 71.0 | 6.0 | 210 | 0.45 | 125 | 65 | C | Non-slip | 6 | A |
| Comparative Example 9 | A | 71.0 | 6.0 | 210 | 0.08 | 130 | 65 | C | Non-slip | 10 | A |
| Comparative Example 10 | A | 73.0 | 11.0 | 210 | 0.20 | 145 | 65 | c | Non-slip | 10 | A |
| Comparative Example 11 | A | 58.0 | 11.0 | 210 | 0.20 | 140 | 55 | C | Non-slip | 10 | B |

(continued)

| | Plated steel wire | | | | | Evaluation of plated steel wire | | | | Wet wire drawing | | |
| --- | --- | --- | --- | --- | --- | --- | --- | --- | --- | --- | --- | --- |
| | Steel of steel wire | brass plating layer | | | Diameter (mm) | Corrosion fatigue characteristics | Adhesion to rubber | | | Type | Back tension ratio (%) | Wire drawability |
| | | Cu content (% by mass) | Al content (% by mass) | Average thickness (nm) | | Corrosion fatigue durability ratio index | Adhesion index | durability of rubber composite | | | | |
| Comparative Example 12 | A | 68.0 | 5.1 | 210 | 0.20 | 130 | 75 | C | | Non-slip | 10 | A |

As shown in Table 2, in the plated steel wires of Examples 1 to 14 including a brass plating layer composed of Cu, Zn, Al, and impurities, in which the Cu content was from 60% by mass to less than 70% by mass, the Al content was from 5.5% by mass to less than 15% by mass, and the average thickness was from 180 nm to 2,000 nm, the adhesion to rubber (i.e., adhesion index and durability of the rubber composite) was ensured and the corrosion fatigue characteristics were excellent.

In Examples 1 to 11, 13, and 14, in which the non-slip type wet wire drawing was performed, and also in Example 12, in which the slip type wet wire drawing was performed, favorable wire drawability was ensured.

Each of the plated steel wires of Comparative Examples 1 to 4 and 12, in which the Al content in the brass plating layer was less than 5.5% by mass, was inferior in corrosion fatigue characteristics to each of the plated steel wires of Examples.

This is considered to be due to insufficient formation of a passive film and an Al-Zn enriched layer contributing to corrosion fatigue characteristics in the plated steel wires of Comparative Examples 1 to 4 and 12 because the Al content was too small.

The plated steel wires of Comparative Examples 1 to 4 and 12 were also inferior in the durability of the rubber composite to the plated steel wires of Examples.

This is considered to be because in the plated steel wires of Comparative Examples 1 to 4 and 12, formation of a passive film and Al-Zn enriched layer was insufficient due to too little Al content, and therefore, Cu excessively diffused in the rubber composite, and Cu and S in rubber reacted excessively.

The plated steel wire of Comparative Example 5, in which the Al content in the brass plating layer was 15% by mass or more, was inferior in adhesion to rubber to the plated steel wires of Examples.

This is considered to be because the reaction between Cu in the brass plating layer and S in the rubber was insufficient because the Al content was too large. Another reason is considered to be that the melting point of the Al particle-dispersed Zn plating layer was too high due to too large Al content, and for this reason, the diffusion heat treatment for forming the brass plating layer was insufficient, and as a result, the strength of the brass plating layer was insufficient.

The plated steel wire of Comparative Example 11, in which the Cu content in the brass plating layer was less than 60% by mass, was inferior in adhesion to rubber to the plated steel wires of Examples. This is considered to be because the reaction between Cu in the brass plating layer and S in the rubber was insufficient due to too little Cu, and formation of 29 the above-described adhesive layer (Cu sulfide layer) was insufficient.

In Comparative Example 2 and Comparative Example 11, in which the Cu content in the brass plating layer was less than 60% by mass, the wire drawability also deteriorated. This is considered to be because since the Cu content was less than 60% by mass, the brass plating layer was hard, and as a result, heat generation during wire drawing was large, ductility of the plated steel wire lowered, and a break was likely to occur.

Each of the plated steel wires of Comparative Examples 8 to 10, in which the Cu content in the brass plating layer was 70% by mass or more, was inferior in adhesion to rubber to the plated steel wires of Examples.

This is considered to be because Cu in the brass plating layer and S in the rubber reacted excessively and a thick Cu sulfide layer was formed between the rubber and the plated steel wire.

The plated steel wire of Comparative Example 7, in which the average thickness of the brass plating layer was less than 180 nm, was inferior in corrosion fatigue characteristics and adhesion to rubber to the plated steel wires of Examples.

This is considered to be because the average thickness of the brass plating layer was too thin, and therefore, part of the steel wire in the plated steel wire was exposed, or a region where the thickness was too thin was generated in a part of the brass plating layer. As a result, it was considered that iron rust was generated in a part of the steel wire, and this iron rust deteriorated corrosion fatigue characteristics and adhesion to rubber.

In Comparative Example 7, in which the average thickness of the brass plating layer was less than 180 nm, wire drawability also deteriorated. This is considered to be because part of the steel wire in the plated steel wire was exposed or a region where the thickness was too thin was generated in a part of the brass plating layer, and therefore, lubricating performance between a die and the plated steel wire deteriorated. It is also considered in Comparative Example 7 that since the back tension ratio was too high, the load on the second plated steel wire became large, and therefore, a break was likely to occur.

The plated steel wire of Comparative Example 6, in which the average thickness of the brass plating layer was over 2,000 nm, was inferior in adhesion to rubber (in particular, the durability of the rubber composite).

This is considered to be because the average thickness of the brass plating layer was too thick, the absolute amount of Cu became excessive, the Cu sulfide layer thickened with time, and the crystal coarsened.

**Claims**

1. A plated steel wire comprising:

   a steel wire; and
   a brass plating layer covering an outer peripheral surface of the steel wire and composed of Cu, Zn, Al, and impurities, in which, assuming a total of Cu, Zn, and Al to be 100% by mass, a Cu content is from 60% by mass to less than 70% by mass and an Al content is from 5.5% by mass to less than 15% by mass, and an average thickness is from 180 nm to 2,000 nm.

2. The plated steel wire according to claim 1, wherein a diameter of the plated steel wire is from 0.10 mm to 0.40 mm.

3. A method of manufacturing the plated steel wire according to claim 1 or 2, the method comprising:
   in a case in which the steel wire, the brass plating layer, and the plated steel wire are a first steel wire, a first brass plating layer, and a first plated steel wire, respectively:

   a process of preparing a second plated steel wire including a second steel wire, and a second brass plating layer composed of Cu, Zn, Al, and an impurities, in which, assuming a total of Cu, Zn, and Al to be 100% by mass, a Cu content is from 60% by mass to less than 70% by mass, and an Al content is from 5.5% by mass to less than 15% by mass, and the second brass plating layer covering an outer peripheral surface of the second steel wire; and
   a process of obtaining the first plated steel wire including the first steel wire and the first brass plating layer by wire drawing the second plated steel wire.

4. The method of manufacturing a plated steel wire according to claim 3, wherein the wire drawing is wet wire drawing that is non-slip type and that satisfies a condition that a back tension acting on the second plated steel wire is from 5% to 20% of a breaking load of the second plated steel wire.

5. A steel cord comprising the plated steel wire according to claim 1 or 2.

6. A rubber composite comprising: the plated steel wire according to claim 1 or 2 or the steel cord according to claim 5; and rubber.


**Patentansprüche**

1. Ein plattierter Stahldraht, umfassend:

   einen Stahldraht; und
   eine Messing-Plattierschicht, die eine äußere periphere Oberfläche des Stahldrahtes bedeckt und aus Cu, Zn, Al und Verunreinigungen besteht, wobei, unter der Annahme, dass eine Summe von Cu, Zn und Al 100 Massen-% beträgt, ein Cu-Gehalt von 60 Massen-% bis weniger als 70 Massen-% beträgt und ein Al-Gehalt von 5,5 Massen-% bis weniger als 15 Massen-% beträgt, und eine durchschnittliche Dicke von 180 nm bis 2.000 nm beträgt.

2. Der plattierte Stahldraht gemäß Anspruch 1, wobei ein Durchmesser des plattierten Stahldrahtes von 0,10 mm bis 0,40 mm beträgt.

3. Ein Verfahren zur Herstellung des plattierten Stahldrahtes gemäß Anspruch 1 oder 2, wobei das Verfahren umfasst:
   in einem Fall, in dem der Stahldraht, die Messing-Plattierschicht und der plattierte Stahldraht jeweils ein erster Stahldraht, eine erste Messing-Plattierschicht und ein erster plattierter Stahldraht sind:

   ein Verfahren zur Herstellung eines zweiten plattierten Stahldrahtes, einschließlich eines zweiten Stahldrahtes und einer zweiten Messing-Plattierschicht, bestehend aus Cu, Zn, Al und Verunreinigungen, wobei, unter der Annahme, dass eine Summe von Cu, Zn und Al 100 Massen-% beträgt, ein Cu-Gehalt von 60 Massen-% bis weniger als 70 Massen-% beträgt und ein Al-Gehalt von 5,5 Massen-% bis weniger als 15 Massen-% beträgt und wobei die zweite Messing-Plattierschicht eine äußere periphere Oberfläche des zweiten Stahldrahtes bedeckt; und

ein Verfahren zum Erhalten des ersten plattierten Stahldrahtes, einschließlich des ersten Stahldrahtes und der ersten Messing-Plattierschicht, durch Drahtziehen des zweiten plattierten Stahldrahtes.

4. Das Verfahren zur Herstellung eines plattierten Stahldrahtes gemäß Anspruch 3, wobei das Drahtziehen ein Nass-Drahtziehen ist, das vom schlupffreien Typ ist und eine Bedingung erfüllt, dass eine Rückspannung, die auf den zweiten plattierten Stahldraht wirkt, von 5 % bis 20 % einer Bruchlast des zweiten plattierten Stahldrahtes beträgt.

5. Ein Stahlseil, umfassend den plattierten Stahldraht gemäß Anspruch 1 oder 2.

6. Ein Kautschukkomposit, umfassend: den plattierten Stahldraht gemäß Anspruch 1 oder 2 oder das Stahlseil gemäß Anspruch 5; und Kautschuk.

**Revendications**

1. Fil d'acier plaqué comprenant :

   un fil d'acier ; et
   une couche de laiton recouvrant une surface périphérique extérieure du fil d'acier et étant composée de Cu, Zn, Al et d'impuretés, dans laquelle,
   en supposant qu'un total de Cu, Zn et Al soit de 100 % en masse, une teneur en Cu fait de 60 % en masse à moins de 70 % en masse et une teneur en Al fait de 5,5 % en masse à moins de 15 % en masse, et une épaisseur moyenne fait de 180 nm à 2000 nm.

2. Fil d'acier plaqué selon la revendication 1, dans lequel un diamètre du fil d'acier plaqué fait de 0,10 mm à 0,40 mm.

3. Procédé de fabrication du fil d'acier plaqué selon la revendication 1 ou 2, le procédé comprenant :
   dans un cas dans lequel le fil d'acier, la couche de laiton et le fil d'acier plaqué sont respectivement un premier fil d'acier, une première couche de laiton et un premier fil d'acier plaqué :

   un processus de préparation d'un second fil d'acier plaqué comportant un second fil d'acier, et une seconde couche de laiton composée de Cu, Zn, Al et d'impuretés, dans laquelle, en supposant qu'un total de Cu, Zn et Al soit de 100 % en masse, une teneur en Cu fait de 60 % en masse à moins de 70 % en masse et une teneur en Al fait de 5,5 % en masse à moins de 15 % en masse, et la seconde couche de laiton recouvrant une surface périphérique extérieure du second fil d'acier ; et
   un processus d'obtention du premier fil d'acier plaqué comportant le premier fil d'acier et la première couche de laiton en tréfilant le second fil d'acier plaqué.

4. Procédé de fabrication d'un fil d'acier plaqué selon la revendication 3, dans lequel le tréfilage est un tréfilage par voie humide qui est un type antidérapant et qui satisfait à une condition qu'une contre-tension agissant sur le second fil d'acier plaqué fait de 5 % à 20 % d'une charge de rupture du second fil d'acier plaqué.

5. Câble d'acier comprenant le fil d'acier plaqué selon la revendication 1 ou 2.

6. Composite caoutchouteux comprenant : le fil d'acier plaqué selon la revendication 1 ou 2 ou le câble d'acier selon la revendication 5 ; et du caoutchouc.

FIG.1

AL CONTENT (% BY MASS)
IN BRASS PLATING LAYER

# FIG.2

# FIG.3

LOAD STRESS σ (MPa)

$10^5$

NUMBER OF REPETITIONS UNTIL BREAKING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016033235 A
- JP 2017128756 A
- JP H09109609 B
- JP 2005036356 A